# EUROPEAN PATENT SPECIFICATION

(11) **EP 2 539 735 B1**
(45) Date of publication and mention of the grant of the patent: **17.08.2016**
(21) Application number: 11706949.2
(22) Date of filing: 24.02.2011
(51) Int. Cl.: G02B 27/09, G01S 7/481, G01S 17/42

(54) **LASER RADAR DEVICE**
LASERRADARGERÄT
DISPOSITIF RADAR À LASER

(30) Priority: 24.02.2010 EP 10154592
(43) Date of publication of application: 02.01.2013
(73) Proprietor: Nederlandse Organisatie voor toegepast- natuurwetenschappelijk onderzoek TNO, 2595 DA 's-Gravenhage (NL)
(72) Inventor: VAN DEN HEUVEL, Johannes, Cornelis, NL-2652 GC Berkel en Rodenrijs (NL); FRANSSEN, Gijsbert, Cornelis, NL-2628 VK Delft (NL); KEMP, Rob, Adrianus, NL-2743 HS Waddinxveen (NL); VAN PUTTEN, Frank, Johannes, Maria, NL-2555 VX Den Haag (NL); SCHUTTE, Klamer, NL-2725 ES Zoetermeer (NL)
(74) Representative: V.O.
(86) International application number: PCT/NL2011/050134
(87) International publication number: WO 2011/105904

(56) References cited:
- EP-A1- 0 840 140
- DE-A1- 4 402 642
- DE-A1- 10 124 433
- DE-A1-102006 008 139
- US-A1- 2007 216 878
- BISSON S E ET AL: "NARROW-BAND, NARROW-FIELD-OF-VIEW RAMAN LIDAR WITH COMBINED DAY AND NIGHT CAPABILITY FOR TROPOSPHERIC WATER-VAPOR PROFILE MEASUREMENTS", APPLIED OPTICS, OPTICAL SOCIETY OF AMERICA, US LNKD- DOI:10.1364/AO.38.001841, vol. 38, no. 9, 20 March 1999 (1999-03-20) , pages 1841-1849, XP000828596, ISSN: 0003-6935

## Description

### Field of the invention

The invention relates to a laser radar system and a method of detecting objects with a laser radar system.

### Background

US2007195393 discloses a laser radar system for prevention of collisions between cars. A laser beam is transmitted from the radar and reflected light is detected. The direction of reflecting is determined by scanning the direction of the laser beam, which is achieved by moving a lens so that the beam enters the lens increasingly off center, resulting in light breaking over an increasingly larger angle.

In principle the beam has to be scanned over a two-dimensional grid of measurement directions to detect possible targets. US2007195393 notes that for collision prevention only high resolution of the azimuth angle towards the target (the angle in the horizontal plane) is important. Accordingly it is proposed to use a beam with an anisotropic cross-section, which is much wider in the vertical direction than in the horizontal direction. This has the effect that the number of different heights can be reduced to which the beam must be directed.

US2007/0216878 also describes a radar for cars. The document proposes to use a relatively narrow beam for detecting cars ahead and a wider beam for detecting pedestrians. For this purpose the beam is made wider when is directed sideways, i.e. as a function of azimuth angle. The different beam widths are realized by means of actuators that deform a mirror. The beam width in the vertical direction and the horizontal direction can be varied. If the beam is scanned only in the horizontal direction, it suffices to vary the horizontal component of the beam width a function of azimuth angle. When a 2D image is formed by scanning both in the horizontal and vertical direction, both the horizontal and vertical components of the beam width can be adjusted, so that the 2D beam width can be increased with growing azimuth angle.

DE 102006008139 discloses a sensor for cars that uses a plurality of beams directed in different directions, for example at different angles above and below the direction of the ground plane. The document proposes to reduce the number of active beams when only measurements at a large distance are needed. Such a situation is detected from the absence of frequent turning of the driving direction. In that case the beams that are directed most upwards and most downwards relative to the ground plane are de-activated.

DE 101 24 433 discloses a method of adjusting the divergence and direction of the beam of a distance measuring deviceof a beam. DE102006008139 discloses a sensor with a dynamic sensing range. The document discloses that the intensity of the beam can be made to depend on spatial angle. Implementations are described with a controllable beam former and with a transmitter that transmits a plurality of beams that can be selectively activated. DE 4402642 discloses a laser distance measurement system.

A Raman Lidar is described in an article by S.E. Bisson, titled "Narrow-band, narrow-field-of-view Raman lidar with combined day and night capability for tropospheric water-vapor profile measurements" and published by the Optical Society of America in 1999. This article concerns measurement of water vapor concentration as a function of height in the earth's atmosphere. Time of flight delays can be used to resolve height. The article notes that it can be a problem to direct a laser beam and a detector at the same target air volume. To solve this problem while retaining sufficient signal to noise ratio, Bisson et al. propose to use a larger field of view with a larger range of angles for detection at low heights in the atmosphere and a narrower range of angles for greater heights. This makes it easier to create overlap between the beam and the field of view at small heights. The absolute size of the field of view increases with height, so that there a smaller range of angles suffices, which improves signal to noise ratio. The non-linear nature of Raman spectroscopy implies that the beam should be kept narrow. Bisson does not appear to use a beam with a diverging profile. Bisson et al. appear to use a field of view with isotropic cross-section and a laser with an isotropic intensity profile. The problem of alignment does not suggest any use for an anisotropic field of view or divergence.

### Summary

It is an object to provide for a laser radar wherein high sensitivity can be combined with a limited number of scans, or a single selected directions of the laser radar.

A laser radar according to claim 1 is provided.

The laser radar may be used for example with the beam directed downward at grazing angles to a surface, the controller being configured to increase the degree of anisotropy of the cross section of the beam with increasing angle to the surface. In this case, elevation angle corresponds to distance to the target. The ratio H/W of the beam height H of the beam in the elevation direction to the beam width W of the beam transverse to the elevation direction may be made to increase with increased deviation between the elevation angle of the beam axis and the horizontal plane. In an embodiment this is done by keeping the beam width constant and increasing or decreasing the beam height with increasing and decreasing deviation between the elevation angle of the beam axis and the horizontal plane respectively. By adjusting anisotropy with distance, higher sensitivity can be realized at long distance and less scans are required to cover shorter distances. A beam with a diverging profile may be used, which diverges anisotropically, with selectable divergence in the elevation direction and constant divergence perpendicularly to the elevation direction.

Other advantageous embodiments are set out in dependent claims.

### Brief description of the drawing

These and other objects and advantageous aspects will become apparent from a description of exemplary embodiments using the following figures
Figure 1 shows a laser radar detection configuration
Figure 1a shows a configuration in top view
Figure 2 shows a laser radar device
Figure 3 shows a beam profile
Figure 4 shows a beam source with a skewed lens
Figure 5 shows a reflection intensity as a function of elevation angleprofile
Figure 6 shows a laser radar device with a cylindrical lens

### Detailed description of exemplary embodiments

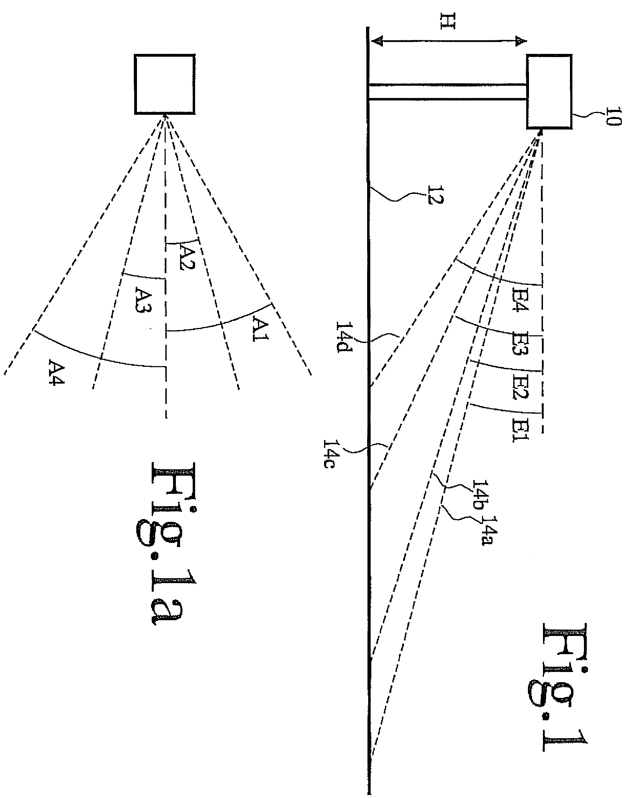

Figure 1 shows a laser radar detection configuration in side view, with a laser radar device 10 at a height H above a surface 12, for example a water surface, and beam directions 14a-d at different elevation angles E1, E2, E3, E4. Figure 1a shows the configuration in top view, with beam directions at different azimuth angles A1, A2, A3, A4.

Laser radar device 10 is used to detect targets on surface 12. As can be seen elevation angles E1, E2, E3, E4 below, or up to, the horizontal direction are used. Thus, the elevation angle corresponds to the distance from the laser radar device 10 at which the beam direction intersects surface 12.

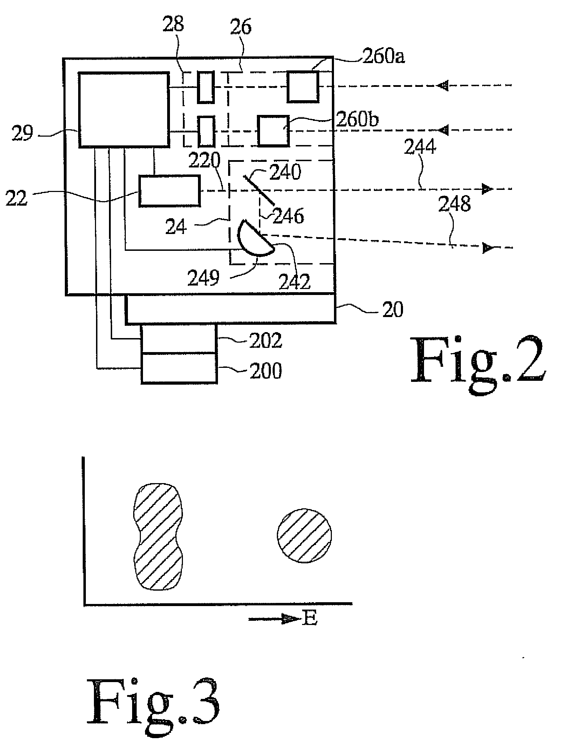

Figure 2 shows a laser radar device comprising an adjustable platform 20, a laser 22, beam forming optics 24, receiver optics 26, a detection arrangement 28 and a control computer 29. In the example of figure 2 detection arrangement 28 comprises two detectors. Adjustable platform 20 comprises a platform azimuth adjustment motor 200 and a platform elevation adjustment motor 202 to rotate adjustable platform 20 around the vertical axis and an axis perpendicular to the vertical (perpendicular to the plane of figure 1), to provide for different azimuth and elevation angles respectively.

Laser 22 may be configured to produce a beam of isotropic cross section around a beam axis 220. Laser 22 may comprise a lens (not shown) to form this beam. By way of example a beam with a divergence at half intensity of one millirad (mrad) may be provided for. Beam forming optics 24 is configured to make the beam cross section anisotropic under control of control computer 29. Beam forming optics 24 comprises a splitter 240, a rotatable reflector 242 and an angle actuator 249 arranged to adjust the orientation of reflector 242 relative to the beam from splitter 240. Splitter 240 is located in the axis 220 of the beam from laser 22 and is arranged to split the beam on axis 220 into a first beam with a first beam axis 244 and second beam with a second beam axis 246. Reflector 242 is located in the second beam axis 246.

Reflector 242 redirects the second beam axis 246 along a third beam axis 248 at an adjustable angle to first beam axis 244. Angle actuator 249 is used to vary this angle. Angle actuator 249 may comprise an electric motor for example, any driver mechanism with a coil, a piezo-electric actuator etc. Angle actuator 249 operates to adjust the angle between the first and third beam axes 244, 248. Adjustment of the angle between the beams over a range of zero mrad to two mrad may be provided for, for example, when the original beam from laser has a divergence at half intensity of one millirad.

Receiver optics 26 concentrates received light on the detectors of detection arrangement 28. In the illustrated embodiment receiver optics 26 comprise a first and second objective 260a,b, with mutually different focal lengths, placed to focus received light on a first and second electro-optical detector cell of detection arrangement 28 respectively. Control computer 29 has outputs coupled to control inputs of platform azimuth and elevation adjustment motors 200, 202, laser 22, angle actuator 249 and adjustable diaphragm 260, and inputs coupled to the detector cells of detection arrangement 28.

In operation laser 22 and beam forming optics 24 operate to generate laser pulses substantially in a fixed direction relative to platform 20. Control computer 29 controls platform azimuth and elevation adjustment motors 200, 202 to rotate platform 20 so that the laser pulses are transmitted in directions corresponding to a range of azimuth angles for each of a plurality of elevation angles. Receiver optics 26 receives back reflected light of the laser beam and directs the received light to detection arrangement 28. Control computer 29 receives detection results from detection arrangement 28 and determines reflection strength as a function of time, for each combination of the azimuth and elevation angle. Control computer 29 has a memory with a control program to control operation. As used herein, the expression that control computer 29 or more generally a controller is configured to perform specified actions will be used to indicated that the instructions of the program, when executed by control computer, will cause the control computer to executed the specified actions, or that dedicated circuits are used to control these actions. Control computer 29 may comprise only a single processing unit, but alternatively a plurality of processing units may be used.

Control computer 29 is configured to control angle actuator 249 in correspondence with changes of the elevation angle. Control computer 29 is configured to control angle actuator 249 to make the angle between first and third beam axes 244, 248 smaller when control computer 29 controls platform elevation adjustment motor 202 to make the elevation angle closer to the horizontal. Conversely, control computer 29 is configured to control angle actuator 249 to make the angle between first and third beam axes 244, 248 larger when control computer 29 controls platform elevation adjustment motor 202 to lower the elevation angle from the horizontal.

Figure 3 illustrates the beam profile 30 as a function of the elevation angle at which the laser radar device is directed. The beam profile is illustrated in terms of a range of its cross-section where the beam has more than half of its peak intensity. The width of the beam profile transverse to the elevation direction is substantially kept constant, but the height of the beam profile in the elevation direction is increased with increased deviation between the elevation angle of the beam axis and the horizontal. A variation a height to width ratio of the beam profile from one to two may be used for example.

In an embodiment wherein measurements are performed at two elevation angles, of 2 and 8 millirad from the horizontal respectively, beam profile heights in the elevation direction of one and two millirad may be used respectively for example. When measurements are performed at more than two elevation angles more different beam profile heights may be used, obtained by setting the orientation of reflector 262 to different angles. In an embodiment, the beam profile is made anisotropic at least for beams with central elevation angle larger than four times the beam divergence angle of the beam at half intensity transverse to the elevation direction (above four millirad in the example of a beam with a width of 1 millirad).

The variation of the beam height has the effect that the influence of distance on received reflection strength is partly compensated by the use of a narrowed beam. An elevation angle closer to the horizontal means that reflections from targets on surface 12 will have to travel over larger distances, which reduces received reflection strength. By decreasing the height for elevation angles that correspond to larger distances to surface 12, this effect is at least partly compensated.

In an embodiment control computer 29 is configured to switch between using the outputs of different detectors of detection arrangement 28 in correspondence with control of elevation adjustment motor 202. This is used to adjust the size of the field of view captured by detection arrangement 28. This is used to adjust the field of view captured by detection arrangement 28. The electro optical detectors of detection arrangement 28 may have a sensitive area with a diameter of 0.2 millimeter for example, the detectors being insensitive outside this area. Because received light is focused on different detectors with objectives 260a,b of different focal length, the field of view of the detectors differ. When a greater focal length is used a smaller range of elevation angles is imaged onto the sensitive area.

Control computer 29 is configured to select a detector on which received light is focused with smaller or larger focal length when control computer 29 controls platform elevation adjustment motor 202 to lower or raise the elevation angle from or to the horizontal respectively. The selected detector is used for detection. Preferably, the size of the range of elevation angles that is imaged onto the sensitive area is made to correspond to size of the range of elevation angles toward points on surface 12 that are illuminated by the beam profile. But this is not necessary: a larger range of elevation angles may be imaged on the sensitive area at the expense of decreased signal to noise ratio, or a smaller range at the expense of a need to scan at more elevation angles, to cover target detection in the same area on surface 12. In an embodiment the detector used with the objective 260b with the smallest focal length is tilted and/or this objective 260b is configured to provide for image size expansion on the detector in the direction perpendicular to the elevation direction relative to the image size in the elevation direction. The expansion may be set in correspondence with the anisotropy of the beam profile. This improves signal to noise ratio.

In an embodiment the beam profile may be made asymmetric to compensate at least partly for distance differences between different points on surface 12 where different parts of the cross-section of the beam intersect surface 12. Within the beam profile the intensity distribution is skewed so that relatively more beam intensity is provided in at elevation angles that correspond to larger distances than at elevation angles that correspond to smaller distances. For example, the elevation height of the beam profile may defined by minimum and maximum elevation angles at which the beam profile has a predetermined intensity, the maximum elevation angle lying closer to the horizontal than the minimum elevation angle. In this case more intensity may be provided in a higher range of angles from the maximum elevation angle to the average of the maximum and minimum elevation angle than in a lower range of angles from the minimum elevation angle to the average of the maximum and minimum elevation angle. This may be realized for example by using a splitter 240 that provides for splitting the incoming beam into first and second beams of unequal intensity. The ratio between intensity in the upper and lower range preferably at least two.

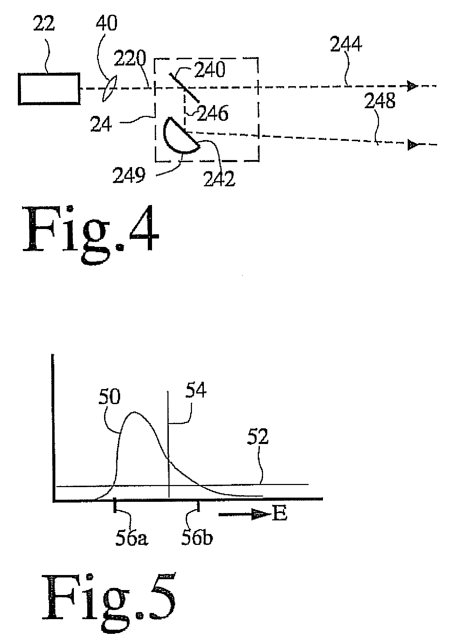

Figure 4 shows an embodiment wherein an asymmetric beam profile is realized by means of a skewed lens 40 of laser 22 with an optical axis at a non-zero angle to the laser beam axis 220. The angle may be selected so large that the ratio between intensity in the upper and lower range is at least two. An angle of at least one degree may be used for example. Instead of a single lens at an angle to the beam, a pair of lenses at angles to split parts of the beam may be used downstream from splitter 240.

In an embodiment the objectives 260a,b of receiver optics 26 and the detectors are aimed at mutually different angles relative to the average beam direction of the laser (e.g. relative to the average of the first and third beam directions 244, 248).

The different aiming may be understood as follows. Receiver optics 26 may image a part of surface 12 onto the detectors of detection arrangement 28. If the relative alignment of the beam axis and receiver optics is kept fixed, the points where the axis of the beam from laser radar device 10 intersects surface 12 is substantially imaged at constant positions, substantially independent of elevation, because both the beam source and the receiver are moved together on platform 20. The part of the surface 12 that is illuminated by the beam is imaged onto sensitive areas of the detectors of detection arrangement 28. This may include a fixed position where the intersection of the beam axis and surface 12 is imaged. However, in this embodiment this position lies off-centre in the sensitive area.

Figure 5 will be used to explain the shift from the central position. Figure 5 shows received reflection intensity 50 as a function of elevation angle at detection arrangement 28. Furthermore figure 5 shows the noise level 52.

It should be noted that this intensity 50 is not symmetric about a central elevation angle 54, which corresponds to the image of the intersection of the beam axis and surface 12. This is due to the effect of differences between the distances associated with different elevations. Absent considerations of distance, a symmetric beam profile would result in an intensity that is a symmetric function of elevation angle. But the reflections from elevation angles that are closer to the horizontal come from greater distance to the laser radar device 10 and are therefore relatively weakened, whereas the reflections from elevation angles that are further from the horizontal come from smaller distance to the laser radar device 10 and are therefore relatively strengthened.

As a result, the elevation angles 56a,b where a predetermined threshold signal to noise ratio occurs lie asymmetrically around the central elevation angle 54. The alignments of the different objectives 260a,b are preferably set so that the ratio between attenuations due to distance to surface 12 at lowest and highest elevation angles that are imaged on the edges of the sensitive area of the detectors of detector 28 at least partly compensates a ratio between the intensities of the transmitted beam at these elevation angles.

Although a specific embodiment has been illustrated it should be appreciated that alternative embodiments are possible.

For example, although an embodiment has been shown wherein the elevation angle and the azimuth angle are changed by changing the orientation of platform 20, it should be appreciated that instead one or both of these angles may be changed on the platform, for example by means of a rotatable mirror or by means of relative movement of laser 22 and a lens.

Control computer 29 may be configured to perform scans over a range of azimuth angles, each at a different elevation angle, or scans over a range of elevation angles, each at a different azimuth angle. Alternatively, or in addition, control computer 29 may be configured to select a combination of an azimuth angle and an elevation angle, set the platform or other orientation mechanism to that direction, set the anisotropy of the beam and/or its asymmetry and/or the received range of elevation angle according to the selected combination and to monitor reflection intensity for that combination without scanning.

As another example, although an embodiment has been shown wherein two detectors, with corresponding objectives 260a,b with mutually different focal lengths are shown for use to detect reflected light when light is transmitted in different elevation angle ranges, it should appreciated that instead a greater number of detectors, each with its own objective with a respective different focal length, each for use when light in a different elevation angle range is transmitted.

In another embodiment an objective with an adjustable focal length may be used, the control computer being configured to control a motor or motors to adjust the focal length and a distance between a detector and the objective when the elevation angle of the transmitted light is changed. In this way, the function of a plurality of detectors can be implemented with one detectors. A single detector may suffice in this case, instead of the two detectors of the embodiment of figure 2. In a further embodiment a motor may be provided to change also the relative position of the detector and the objective in the elevation direction when the elevation angle of the transmitted light is changed under control of control computer 29. In this way at least partial compensation for the distance effect illustrated by figure 5 may be provided for.

In another embodiment an adjustable diaphragm may be used in front of a detector. The adjustable diaphragm may be configured to block light from an adjustable part of the detector. The control computer 29 may be configured to control the adjustable diaphragm so as to adapt the size of the range of elevation angles that is passed to the detector and/or the position of this range relative to the point where the intersection of surface 12 and the average beam axis is imaged onto the detector. In this way at least partial compensation for the distance effects may be provided for.

In another embodiment the detector may be replaced by a matrix of sensing elements at an array of pixel positions, such as a CCD sensor, an objective imaging received light on this matrix. In this case control computer 29 may implement the effect of the diaphragm by selection of pixel positions that will be used for detection. Control computer 29 may be configured to compute a sum of the intensities of the selected pixel positions to form a detection result. The selection may involve reducing and increasing the range of pixel positions in the elevation direction when the laser radar device transmits light at elevation angles relatively closer to and further from the horizontal respectively, optionally keeping the range of pixel positions transverse to the elevation direction constant, and optionally shifting the range of the selected pixel positions in the elevation direction as described in the context of figure 5.

Although an embodiment has been shown wherein the beam profile is adjusted using a splitter 240 and a rotatable reflector 242 it should be appreciated that other forms of adjustment of the beam profile may be made. For example splitter 240 may be rotated. Further reflectors and/or lenses etc may be located in the beam paths. Instead of a reflecting optical element like reflector 242, a refracting optical element like a prism or a lens may be used with an actuator such as a motor to move or rotate the refracting element under control of control computer 29 to change the angle between the beam axes 244, 258 emerging from the laser radar device. The reflecting or refracting optical element may be located in any of the output paths of splitter 240. A fixed angle reflector may be used in combination with the refracting optical element.

Further splitters may be used located in the first and second beam axes 244, 246 so that the beam is split in four ways. Further rotatable reflectors may be used to control the direction of reflection of at least three of these four split beams. In this way the elongation of the beam profile can be increased. When the original beam divergence at half intensity is one mrad for example, a beam profile with a controllable divergence of up to four mrad in the elevation direction may be realized, perpendicular to a width of one millirad. More splitters and more reflectors may be used to realize even more anisotropic beam profiles. Control computer 29 may be configured to adjust the anisotropy by means of the reflector in steps according to the elevation direction.

As another example a plurality of different lenses may be provided, such as a spherical lens and a cylindrical lens. In this embodiment control computer 29 may be configured to direct the laser beam via a selectable one of these lenses dependent on the elevation angle, for example by means of an actuator that drives a rotatable mirror or an actuator or actuators that moves a selected lens or selected lenses in and out of the beam path.

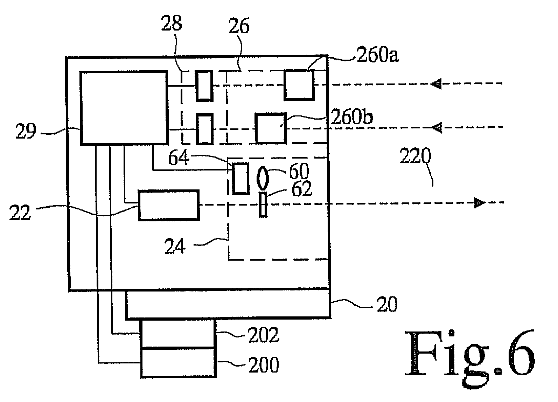

Figure 6 shows an example, wherein a spherical lens 60 and a cylindrical lens 62 are provided, with a motor 64 coupled to a frame (not shown) of spherical lens 60 and cylindrical lens 62 to move spherical lens 60 and cylindrical lens 62 into and out of the beam path. Alternatively movable or rotatable refractive or reflective optical elements may be used to redirect the beam through spherical lens 60 or cylindrical lens 62. Control computer 29 is coupled to motor 62 and control computer 29 is configured to control motor 24 to ensure that the beam path goes through spherical lens 60 or a cylindrical lens 62 when the laser radar device is directed at elevations that are relatively closer to and further from the horizontal respectively. The cylindrical axis of the cylindrical lens 62 is directed so that the height of the beam divergence in the elevation direction is increased relative to the width perpendicular to that direction. Instead of using alternative lenses, a cylindrical correction lens may be moved into and out of the beam path to adjust anisotropy. In another embodiment a pair of cylindrical lenses is located in the beam path with cylindrical axes perpendicular to the beam path and an actuator coupled to control computer 29 is provided to rotate the cylindrical axes of lenses in the pair relative to one another. This also has the effect that anisotropy is adjusted.

Although an example has been shown wherein surface 12 is a horizontal surface, it should be appreciated that a surface at another angle may be used. In that case, the horizontal should be replaced by a direction of surface 12.

Although adjustment of the asymmetry of the beam intensity has been described in combination with adjustment of the anisotropy, it should be appreciated that it can be applied also without adjustment of the anisotropy. Although shifting of the range of elevation angles to which the detection arrangement is sensitive has been described in combination with adjustment of the anisotropy, it should be appreciated that it can be applied also without adjustment of the anisotropy.

## Claims

1. A laser radar (10) comprising
- a laser beam source (22) arranged to generate a laser beam;
- means (20) for changing an elevation angle of a beam axis of the beam;
- means (24) for controllably adjusting a cross-section of the beam; **characterized in that** the means for changing an elevation angle (20) are configured to direct the beam downward at grazing angles to a surface (12), and **in that** the laser radar comprises
- a controller (29) configured to control adjustment of a degree of anisotropy of the beam in correspondence with changes of the elevation angle, by increasing a ratio H/W, of the beam height H of the beam in the elevation direction to the beam width W of the beam transverse to the elevation direction, with increasing angle to the surface.

2. A laser radar (10) according to claim 1, wherein the controller (29) is configured to keep the beam width constant and increase or decrease the beam height with increasing and decreasing deviation between the elevation angle of the beam axis and the surface (12) respectively.

3. A laser radar (10) according to any of the preceding claims, wherein the means (24) for controllably adjusting anisotropy of a cross-section of the beam comprise
- a cylindrical lens (62);
- an actuator (64) with a control input coupled to the controller (29), the actuator (64) being configured to move the cylindrical lens (62) relative to the laser beam between configurations wherein the beam runs through the cylindrical lens (62) and not respectively, and/or to rotate a cylindrical axis of the cylindrical lens (62) relative to the laser beam.

4. A laser radar according to claim 2 or 3, wherein the means (24) for controllably adjusting anisotropy of a cross-section of the beam comprise
- a splitter (240) in a path of the beam, providing a first and second output path (244, 246) for split parts of the beam from the laser beam source (22);
- a reflecting or refracting optical element (242) in the first output path;
- an angle actuator (249) configured to move or rotate the reflecting or refracting optical element (242), so that an angle between the beam axes in the first and second output path is changed.

5. A laser radar according to any of the preceding claims, comprising means (40) for skewing an intensity distribution in a profile of the beam.

6. A laser radar according to claim 5, wherein the means (40) for skewing are configured to skew the intensity distribution by using a higher intensity in a first part of the profile relative to an intensity of a second part of the profile at angles that are further from the direction of the surface than elevation angles in the first part.

7. A laser radar according to claim 6, wherein a ratio of the intensities of the first and second part is at least two.

8. A laser radar according to any one of claims 5 to 7, comprising a lens (40) in a path of the beam, having an optical axis at a non-zero angle to the path of the beam, or a rotatable optical axis, the controller being configured to control adjustment of the angle between the optical axis of the lens (40) and the path of the beam in correspondence with changes of the elevation angle.

9. A laser radar according to any one of claims 5 to 7, comprising a splitter (240) in a path of the beam and one or more optical elements to form respective parts of the beam in respective elevation angle ranges of a beam profile from respective split of outputs of the splitter (240), the splitter providing for an intensity ratio between the split of parts that is unequal to one.

10. A laser radar according to any of the preceding claims, comprising a receiver (26, 28) directed to receive reflections of the beam from positions at a surface, the receiver (26, 28) comprising means for adjusting a range of elevation angles to which the receiver is sensitive, the controller (29) being configured to control a size of said range in correspondence with changes of the elevation angle.

11. A laser radar according to any of the preceding claims, comprising a receiver (26, 28) directed to receive reflections of the beam from positions at a surface, the receiver (26, 28) comprising means for adjusting a range of elevation angles to which the receiver is sensitive, the controller being configured to control a position of said range in correspondence with changes of the elevation angle.

12. A laser radar according to claim 11, wherein the means (20) for changing the elevation angle are configured to direct the beam downward at grazing angles to a surface, and wherein the means for adjusting the range of elevation angles are configured to place a centre of said range at an elevation angle that is further from a direction of said surface than an elevation angle at which a central axis of the beam from the laser radar device intersects the surface.

13. A laser radar according to any of claims 10 to 12, wherein the means for adjusting the range of elevation angles to which the receiver is sensitive comprise a first and second detector and a first and second objective with mutually different focal distance, configured to focus received reflected light on the first and second detector respectively.

14. A method of measuring laser radar reflections, the method comprising
- transmitting a laser beam;
- adjusting a profile of the beam in correspondence with changes of the elevation angle,
**characterized in that** the method measures reflections from a target at a surface (12), the laser beam being directed at grazing elevation angles (14a-d) to the surface (12), the method comprising adjusting anisotropy of the beam by increasing the degree of anisotropy with increasing angle to a direction of the surface by increasing a ratio H/W, of the beam height H of the beam in the elevation direction to the beam width W of the beam transverse to the elevation direction, with increasing angle to the surface.

## Patentansprüche

1. Laserradar (10), umfassend
- eine Laserstrahlquelle (22), angeordnet zum Erzeugen eines Laserstrahls;
- Mittel (20) zum Ändern eines Höhenwinkels einer Strahlachse des Strahls;
- Mittel (24) zum regelbaren Einstellen eines Querschnitts des Strahls;
**dadurch gekennzeichnet, dass** die Mittel zum Ändern eines Höhenwinkels (20) konfiguriert sind, um den Strahl abwärts in Streifwinkeln zu einer Oberfläche (12) zu richten, und dass das Laserradar Folgendes umfasst:
- einen Regler (29), konfiguriert zum Regeln der Einstellung eines Richtungsabhängigkeitsgrads des Strahls in Übereinstimmung mit Änderungen des Höhenwinkels durch Erhöhen eines Verhältnisses H/W der Strahlhöhe H des Strahls in Höhenrichtung zu der Strahlbreite W des Strahls quer zur Höhenrichtung, mit zunehmendem Winkel zu der Oberfläche.

2. Laserradar (10) nach Anspruch 1, wobei der Regler (29) konfiguriert ist, um die Strahlbreite konstant zu halten und die Strahlhöhe mit zunehmender und abnehmender Abweichung zwischen dem Höhenwinkel der Strahlachse bzw. der Oberfläche (12) zu erhöhen oder zu vermindern.

3. Laserradar (10) nach einem der vorhergehenden Ansprüche, wobei die Mittel (24) zum regulierbaren Einstellen der Richtungsabhängigkeit eines Querschnitts des Strahls Folgendes umfassen:
- eine zylindrische Linse (62);
- ein Betätigungselement (64) mit einem Steuereingang, gekoppelt an den Regler (29), welches Betätigungselement (64) konfiguriert ist, um die zylindrische Linse (62) in Bezug auf den Laserstrahl zwischen Konfigurationen zu bewegen, wobei der Strahl durch die zylindrische Linse (62) läuft bzw. nicht läuft, und/oder eine zylindrische Achse der zylindrischen Linse (62) in Bezug auf den Laserstrahl zu drehen.

4. Laserradar nach Anspruch 2 oder 3, wobei die Mittel (24) zum regelbaren Einstellen der Richtungsabhängigkeit eines Querschnitts des Strahls Folgendes umfassen:
- einen Splitter (240) in einem Weg des Strahls, der einen ersten und zweiten Ausgangsweg (244, 246) für gesplittete Teile des Strahls von der Laserstrahlquelle (22) bereitstellt;
- ein reflektierendes oder refraktierendes optisches Element (242) in dem ersten Ausgangsweg;
- ein Winkelbetätigungselement (249), konfiguriert zum Bewegen oder Drehen des reflektierenden oder refraktierenden optischen Elements (242), sodass ein Winkel zwischen den Strahlachsen in dem ersten und zweiten Ausgangsweg geändert wird.

5. Laserradar nach einem der vorhergehenden Ansprüche, umfassend Mittel (40) zum Neigen einer Intensitätsverteilung in einem Profil des Strahls.

6. Laserradar nach einem Anspruch 5, wobei die Mittel (40) zum Neigen konfiguriert sind, um die Intensitätsverteilung durch Verwendung einer höheren Intensität in einem ersten Teil des Profils in Bezug auf eine Intensität eines zweiten Teils des Profils in Winkeln zu neigen, die von der Richtung der Oberfläche weiter weg sind als Höhenwinkel im ersten Teil.

7. Laserradar nach Anspruch 6, wobei ein Verhältnis der Intensitäten des ersten und zweiten Teils mindestens zwei ist.

8. Laserradar nach einem der Ansprüche 5 bis 7, umfassend eine Linse (40) in einem Weg des Strahls, mit einer optischen Achse in einem Nicht-Null-Winkel zu dem Weg des Strahls, oder einer drehbaren optischen Achse, wobei der Regler konfiguriert ist, um die Einstellung des Winkels zwischen der optischen Achse der Linse (40) und dem Weg des Strahls entsprechend Änderungen des Höhenwinkels zu regeln.

9. Laserradar nach einem der Ansprüche 5 bis 7, umfassend einen Splitter (240) in einem Weg des Strahls und ein oder mehr optische Elemente zum Bilden entsprechender Teile des Strahls in entsprechenden Höhenwinkelbereichen eines Strahlprofils vom entsprechenden Split von Ausgängen des Splitters (240), wobei der Splitter ein Intensitätsverhältnis zwischen dem Split von Teilen bereitstellt, das ungleich eins ist.

10. Laserradar nach einem der vorhergehenden Ansprüche, umfassend einen Empfänger (26, 28), gerichtet zum Empfangen von Reflexionen des Strahls von Positionen an einer Oberfläche, der Empfänger (26, 28) umfassend Mittel zum Einstellen eines Bereichs von Höhenwinkeln, auf die der Empfänger empfindlich reagiert, wobei der Regler (29) konfiguriert ist, um eine Größe des Bereichs in Übereinstimmung mit Änderungen des Höhenwinkels zu regeln.

11. Laserradar nach einem der vorhergehenden Ansprüche, umfassend einen Empfänger (26, 28), gerichtet zum Empfangen von Reflexionen des Strahls von Positionen an einer Oberfläche, der Empfänger (26, 28) umfassend Mittel zum Einstellen eines Bereichs von Höhenwinkeln, auf die der Empfänger empfindlich reagiert, wobei der Regler konfiguriert ist, um eine Position des Bereichs in Übereinstimmung mit Änderungen des Höhenwinkels zu regeln.

12. Laserradar nach Anspruch 11, wobei die Mittel (20) zum Ändern des Höhenwinkels konfiguriert sind, um den Strahl abwärts in Streifwinkeln zu einer Oberfläche zu richten, und wobei die Mittel zum Einstellen des Bereichs von Höhenwinkeln konfiguriert sind, einen Mittelpunkt des Bereichs in einem Höhenwinkel zu platzieren der von einer Richtung der Oberfläche weiter weg ist als ein Höhenwinkel, in dem eine Mittelachse des Strahls von der Laserradarvorrichtung die Oberfläche schneidet.

13. Laserradar nach einem der Ansprüche 10 bis 12, wobei die Mittel zum Einstellen des Bereichs von Höhenwinkeln, auf die der Empfänger empfindlich reagiert, einen ersten und zweiten Detektor und ein erstes und zweites Objektiv mit voneinander verschiedenen Brennweiten umfasst, konfiguriert um das empfangene reflektierte Licht auf den ersten bzw. zweiten Detektor zu fokussieren.

14. Verfahren zum Messen von Laserradarreflexionen, das Verfahren umfassend
- das Übertragen eines Laserstrahls;
- das Einstellen des Profils des Strahls in Übereinstimmung mit Änderungen des Höhenwinkels,
**dadurch gekennzeichnet, dass** das Verfahren Reflexionen von einem Ziel an einer Oberfläche (12) misst, wobei der Laserstrahl in streifenden Höhenwinkeln (14a-d) zu der Oberfläche (12) gerichtet ist, das Verfahren umfassend das Einstellen der Richtungsabhängigkeit des Strahls durch Erhöhen des Richtungsabhängigkeitsgrads mit zunehmendem Winkel zu einer Richtung der Oberfläche durch Erhöhen eines Verhältnisses H/W der Strahlhöhe H des Strahls in Höhenrichtung zu der Strahlbreite W des Strahls quer zu der Höhenrichtung, mit zunehmendem Winkel zu der Oberfläche.

## Revendications

1. Radar à laser (10), comprenant
- une source de faisceau laser (22) agencée pour générer un faisceau laser ;
- des moyens (20) pour changer un angle d'élévation d'un axe de faisceau du faisceau ;
- des moyens (24) pour ajuster d'une façon pouvant être commandée une section transversale du faisceau ;
**caractérisé en ce que** les moyens pour changer un angle d'élévation (20) sont configurés pour diriger le faisceau vers le bas à des angles rasants par rapport à une surface (12), et **en ce que** le radar à laser comprend
- un dispositif de commande (29) configuré pour commander l'ajustement d'un degré d'anisotropie du faisceau en correspondance avec des changements de l'angle d'élévation, en augmentant un rapport H/W, de la hauteur de faisceau H du faisceau dans la direction d'élévation sur la largeur de faisceau W du faisceau transversale à la direction d'élévation, avec un angle croissant par rapport à la surface.

2. Radar à laser (10) selon la revendication 1, dans lequel le dispositif de commande (29) est configuré de manière à maintenir la largeur de faisceau constante, et à augmenter ou à diminuer la hauteur de faisceau avec un écart augmentant et diminuant entre l'angle d'élévation de l'axe de faisceau et la surface (12) respectivement.

3. Radar à laser (10) selon l'une quelconque des revendications précédentes, dans lequel les moyens (24) pour ajuster d'une façon pouvant être commandée une anisotropie d'une section transversale du faisceau comprennent
- une lentille cylindrique (62) ;
- un actionneur (64) avec une entrée de commande couplée au dispositif de commande (29), l'actionneur (64) étant configuré pour déplacer la lentille cylindrique (62) par rapport au faisceau laser entre des configurations dans lesquelles le faisceau s'étend ou non à travers la lentille cylindrique (62) respectivement, et/ou pour faire tourner un axe cylindrique de la lentille cylindrique (62) par rapport au faisceau laser.

4. Radar à laser selon la revendication 2 ou 3, dans lequel les moyens (24) pour ajuster d'une façon pouvant être commandée une anisotropie d'une section transversale du faisceau comprennent
- un diviseur (240) dans un trajet du faisceau, fournissant des premier et second trajets de sortie (244, 246) pour des parties divisées du faisceau provenant de la source de faisceau laser (22) ;
- un élément optique réfléchissant ou réfracteur (242) dans le premier trajet de sortie ;
- un actionneur d'angle (249) configuré pour déplacer ou faire pivoter l'élément optique réfléchissant ou réfracteur (242), de sorte qu'un angle entre les axes de faisceau dans les premier et second trajets de sortie est modifié.

5. Radar à laser selon l'une quelconque des revendications précédentes, comprenant des moyens (40) pour dévier une distribution d'intensité dans un profil du faisceau.

6. Radar à laser selon la revendication 5, dans lequel les moyens (40) pour dévier sont configurés pour dévier la distribution d'intensité en utilisant une intensité plus élevée dans une première partie du profil par rapport à une intensité d'une seconde partie du profil sur des angles qui sont plus loin de la direction de la surface que des angles d'élévation dans la première partie.

7. Radar à laser selon la revendication 6, dans lequel un rapport entre les intensités des première et seconde parties est au moins de deux.

8. Radar à laser selon l'une quelconque des revendications 5 à 7, comprenant une lentille (40) dans un trajet du faisceau, ayant un axe optique sur un angle non nul par rapport à la trajectoire du faisceau, ou un axe optique rotatif, le dispositif de commande étant configuré pour commander l'ajustement de l'angle entre l'axe optique de la lentille (40) et le trajet du faisceau en correspondance avec des changements de l'angle d'élévation.

9. Radar à laser selon l'une quelconque des revendications 5 à 7, comprenant un diviseur (240) dans un trajet du faisceau et un ou plusieurs éléments optiques pour former des parties respectives du faisceau dans des plages d'angles d'élévation respectives d'un profil de faisceau à partir d'une division respective de sorties du diviseur (240), le diviseur fournissant un rapport d'intensité entre la division de parties qui est différent de un.

10. Radar à laser selon l'une quelconque des revendications précédentes, comprenant un récepteur (26, 28) dirigé pour recevoir des réflexions du faisceau à partir de positions au niveau d'une surface, le récepteur (26, 28) comprenant des moyens pour ajuster une plage d'angles d'élévation sur lesquels le récepteur est sensible, le dispositif de commande (29) étant configuré pour commander une taille de ladite plage en correspondance avec des changements de l'angle d'élévation.

11. Radar à laser selon l'une quelconque des revendications précédentes, comprenant un récepteur (26, 28) dirigé pour recevoir des réflexions du faisceau à partir de positions au niveau d'une surface, le récepteur (26, 28) comprenant des moyens pour ajuster une plage d'angles d'élévation sur lesquels le récepteur est sensible, le dispositif de commande étant configuré pour commander une position de ladite plage en correspondance avec des changements de l'angle d'élévation.

12. Radar à laser selon la revendication 11, dans lequel les moyens (20) pour changer l'angle d'élévation sont configurés pour diriger le faisceau vers le bas à des angles rasants par rapport à une surface, et dans lequel les moyens pour ajuster la plage d'angles d'élévation sont configurés pour placer un centre de ladite plage à un angle d'élévation qui est plus éloigné d'une direction de ladite surface qu'un angle d'élévation au niveau duquel un axe central du faisceau provenant du dispositif de radar à laser croise la surface.

13. Radar à laser selon l'une quelconque des revendications 10 à 12, dans lequel les moyens pour ajuster la plage d'angles d'élévation sur lesquels le récepteur est sensible comprennent des premier et second détecteurs et des premier et second objectifs avec des distances focales mutuellement différentes, configurés pour focaliser la lumière réfléchie reçue sur les premier et second détecteurs respectivement

14. Procédé de mesure de réflexions de radar à laser, le procédé comprenant les étapes consistant à
- transmettre un faisceau laser ;
- ajustement un profil du faisceau en correspondance avec des changements de l'angle d'élévation,
**caractérisé en ce que** le procédé mesure les réflexions à partir d'une cible au niveau d'une surface (12), le faisceau laser étant dirigé selon des angles d'élévations rasants (14a-d) par rapport à la surface (12), le procédé comprenant l'ajustement de l'anisotropie du faisceau en augmentant le degré d'anisotropie avec un angle croissant par rapport à une direction de la surface en augmentant un rapport H/W, de la hauteur de faisceau H du faisceau dans la direction d'élévation sur la largeur de faisceau W du faisceau transversale à la direction d'élévation, avec un angle croissant par rapport à la surface.
